# EUROPÄISCHE PATENTANMELDUNG

(11) **EP 3 916 744 A1**
(43) Veröffentlichungstag der Anmeldung: **01.12.2021**
(21) Anmeldenummer: 20177143.3
(22) Anmeldetag: 28.05.2020
(51) Int. Cl.: H01G 4/012, H01G 4/18, H01G 4/30, H01G 4/232

(54) **FOLIENKONDENSATOREN**

(71) Anmelder: Siemens Aktiengesellschaft, 80333 München (DE)
(72) Erfinder: Junghänel, Marion, 91054 Erlangen (DE); Kürten, Bernd, 90587 Obermichelbach (DE); Brendel, Helmut, 91058 Erlangen (DE); Hensler, Alexander, 91466 Gerhardshofen (DE); Oschmann, Philipp, 91058 Erlangen (DE); Hilbinger, Gerd, 91448 Emskirchen (DE)

(57) **Zusammenfassung**

Die Erfindung betrifft einen Folienkondensator (1), umfassend wenigstens eine metallisierte Dielektrikumsfolie (3) mit einer ersten und zweiten Stirnseite (9, 10) und mit einer ersten und zweiten Folienseite (11, 12) und eine erste und zweite Kontaktschicht (7,8), wobei die erste Stirnseite (9) der metallisierten Dielektrikumsfolie (3) mit der ersten Kontaktschicht (7) und die zweite Stirnseite (10) der metallisierten Dielektrikumsfolie (3) mit der zweiten Kontaktschicht (8) verbunden ist und wobei die metallisierte Dielektrikumsfolie (3) mindestens eine erste, zweite und dritte Metallisierungsschicht (4,5,6) aufweist, dadurch gekennzeichnet, dass auf der ersten Folienseite (11) der metallisierten Dielektrikumsfolie (3) mindestens zwei der Metallisierungsschichten (4, 5, 6) aufgebracht sind und auf der zweiten Folienseite (12) der metallisierten Dielektrikumsfolie (3) mindestens eine weitere der Metallisierungsschichten (4,5,6) aufgebracht ist und die Metallisierungsschichten (4,5,6) derart auf der ersten und zweiten Folienseite (11, 12) der metallisierten Dielektrikumsfolie (3) angeordnet sind, dass zwischen den Metallisierungsschichten (4,5,6) der beiden Folienseiten (11, 12) mindestens eine erste Überlappung (33) mit einer ersten Teilkapazität (35) und eine zweite Überlappung (34,340) mit einer zweiten Teilkapazität (36,360) ausgebildet sind und die Teilkapazitäten (35,36,360) eine Reihenschaltung bilden. Die Erfindung betrifft ferner einen Filter (23) mit dem Folienkondensator (1) und einem Umrichter (24) mit dem Filter (23).

## Beschreibung

Die Erfindung betrifft einen Folienkondensator, umfassend wenigstens eine metallisierte Dielektrikumsfolie mit einer ersten und zweiten Stirnseite und mit einer ersten und zweiten Folienseite und eine erste und zweite Kontaktschicht, wobei die erste Stirnseite der metallisierten Dielektrikumsfolie mit der ersten Kontaktschicht und die zweite Stirnseite der metallisierten Dielektrikumsfolie mit der zweiten Kontaktschicht verbunden ist und die metallisierte Dielektrikumsfolie eine erste, zweite und dritte Metallisierungsschicht aufweist. Ferner betrifft die Erfindung einen Filter mit dem Folienkondensator und einen Umrichter mit dem Filter.

Kondensatoren finden in fast allen elektrischen und elektronischen Geräten und Systemen der Automatisierungs- und Antriebstechnik, insbesondere für Anwendungen in der Industrie sowie der Energieerzeugung und Energieverteilung, einen vielfältigen Einsatz. So erstreckt sich die Anwendung für Kondensatoren beispielsweise von der kurzzeitigen Speicherung von Energie über die Stabilisierung von Netzspannungen, der Verbesserung der elektromagnetischen Verträglichkeit (EMV) bis hin zur Unterstützung gerätespezifischer Funktionen, wie z.B. der Kopplung von Signalen in Frequenzweichen für akustische Geräte.

Hervorgehoben werden kann hier insbesondere auch der Einsatz von Kondensatoren in elektrischen Filtern, welche einerseits die Abgabe von elektrischen Störungen elektronischer Geräte, beispielsweise von elektrischen Umrichtern, in elektrische Netze zumindest begrenzen, wie auch die elektromagnetische Verträglichkeit derartiger elektrischer Geräte gegen Störungen aus dem Netz verbessern.

Die möglichen Bauformen und elektrische Auslegungen für einen Kondensator sind vielfältig und hängen u.a. von den elektrischen Einsatzbedingungen, dem grundsätzlichen Verwendungszweck und von qualitativen Anforderungen ab, wobei auch der Kostenfaktor nicht zu vernachlässigen ist.

Folienkondensator sind im eigentlichen Sinne insbesondere Kunststoff-Folienkondensatoren. Sie besitzen aufgrund ihrer konstruktiven Merkmale sehr geringe ohmsche Verluste und parasitäre Induktivitäten. Dadurch sind sie für Anwendungen in hohen Frequenzbereichen, zur Glättung von Spannungsspitze, Störimpulsen oder Impulsflanken aber auch für eine hohe Impulsstrombelastbarkeit geeignet.

In einem Folienkondensator sind oftmals mehrere Dielektrikumsfolien aufeinanderfolgend angeordnet, demnach geschichtet, wobei auf die einzelnen Dielektrikumsfolien je nach Ausführungsart einseitig oder auch zweiseitig eine Metallisierungsschicht aufgebracht ist. Im Allgemeinen sind an zwei gegenüberliegenden Stirnseiten der aufeinanderfolgend angeordneten Dielektrikumsfolien jeweils Kontaktschichten aufgebracht, wobei die Metallisierungsschicht oft mit der einen oder der anderen Kontaktschicht kontaktiert ist.

Die Kontaktschichten werden beispielsweise in Form eines verflüssigten Metalls auf die Stirnfläche der aufeinanderfolgend angeordneten Dielektrikumsfolien aufgesprüht. Dabei werden die aufeinanderfolgend angeordneten Dielektrikumsfolien z.B. um eine Achse gewickelt und können zum Schutz vor Umwelteinflüssen, insbesondere vor Feuchtigkeit, von einer Kunststoffhülle umgeben sein. Die elektrische Kontaktierung des so entstandenen Folienkondensators kann dann nur aus der Kunststoffhülle heraus erfolgen.

Oft können sich bei der Herstellung aber auch im Betrieb der Folienkondensatoren mit Luft gefüllte Spalten zwischen einer Dielektrikumsfolie und einer Metallisierungsschicht bilden. Im Betriebsfall kann es in den Luftspalten aufgrund der dielektrischen Polarisation der Dielektrikumsfolie durch eine auf ihrer Gegenseite angebrachte, gegenpolig kontaktierte Metallisierungsschicht zu hohen Feldstärken kommen. Dies kann Teilentladungen mit Spannungsüberschlägen auslösen, welche vorrangig an den Stellen auftreten, an denen auf Grund von Unebenheiten der beiden Oberflächen der Abstand leicht reduziert ist. Bei einer anliegenden Wechselspannung finden derartige Spannungsüberschläge periodisch statt. Ein Spannungsüberschlag kann zudem durch eine Spannungsspitze in der Netzspannung verursacht werden.

Durch eine kaum vermeidbare Restfeuchtigkeit im Folienkondensator oxidiert eine Metallisierungsschicht im Laufe ihrer Betriebsdauer oberflächlich mehr und mehr, was meist zu einer Passivierung ihrer Oberfläche führt, und die Metallisierungsschicht vor einer tiefer eindringenden Korrosion schützt. Ein Spannungsüberschlag kann diese Passivierung überwinden, die schützende Oxidationsschicht wird zerstört, und eine tiefere Ebene der Metallisierungsschicht kann nun oxidiert. Im Bereich der Spannungsüberschläge kann so nach und nach die gesamte Metallisierungsschicht oxidieren, wobei der elektrische Widerstand in dieser Flächenzone ansteigt.

Geschieht eine derartige Oxidation in der Nähe der Ankontaktierung mit einer oder beiden der Kontaktschichten, wird die elektrische Anbindung der Metallisierungsschicht an die jeweilige Kontaktschicht mit zunehmender Betriebsdauer demnach hochohmiger, was zu Leistungsverlusten in Verbindung mit einer unerwünschten Erwärmung des Folienkondensators durch die Verlustleistung erzeugte Verlustwärme führt.

Diese Erwärmung kann zur vollständigen Zerstörung des Folienkondensators führen, diesen insbesondere durch ein Schmelzen der Dielektrikumsfolien auch in Brand setzen. Daraus kann ein Betriebsrisiko für den Einsatz der Folienkondensatoren aufgrund einer verminderten elektrischen Verfügbarkeit des Folienkondensators resultieren. Diese verminderte elektrischen Verfügbarkeit des Folienkondensators hat oft auch einen entscheidenden Einfluss auf die Verfügbarkeit der elektrischen Geräte und Systeme, welche den Folienkondensator einsetzen.

Auch entsteht aufgrund von generellem Kostendruck, begrenzter räumlicher Einbaumöglichkeiten und geforderter Gewichtsreduzierung von elektrischen Geräten und Systemen für den Einsatz von Folienkondensatoren die Notwendigkeit, diesen Anforderungen zu begegnen, somit Folienkondensatoren z.B. für den Einsatz nicht weit über die Einsatzbedingungen hinaus zu dimensionieren und trotzdem hohe Anforderungen an die elektrische Verfügbarkeit zu erfüllen.

Der Erfindung liegt daher die Aufgabe zugrunde, einen Folienkondensator, einen Filter mit Folienkondensator und einen elektrischen Umrichter mit dem Filter vorzuschlagen, welche gegenüber dem Stand der Technik eine verbesserte elektrische Verfügbarkeit in Verbindung mit verbesserten Betriebsdaten erreichen.

Die Aufgabe wird durch einen Folienkondensator mit den in Anspruch 1 angegebenen Merkmalen, durch einen Filter mit dem Folienkondensator nach den in Anspruch 14 angegebenen Merkmalen und einen Umrichter mit dem Filter nach den in Anspruch 15 angegebenen Merkmalen gelöst.

Für die Lösung der Aufgabe wird ein Folienkondensator vorgeschlagen, welcher wenigstens eine metallisierte Dielektrikumsfolie mit einer ersten und zweiten Stirnseite und mit einer ersten und zweiten Folienseite und eine erste und zweite Kontaktschicht umfasst, wobei die erste Stirnseite der metallisierten Dielektrikumsfolie mit der ersten Kontaktschicht und die zweite Stirnseite der metallisierten Dielektrikumsfolie mit der zweiten Kontaktschicht verbunden ist und wobei die metallisierte Dielektrikumsfolie mindestens eine erste, zweite und dritte Metallisierungsschicht aufweist, dadurch gekennzeichnet, dass auf der ersten Folienseite der metallisierten Dielektrikumsfolie mindestens zwei der Metallisierungsschichten aufgebracht sind und auf der zweiten Folienseite der metallisierten Dielektrikumsfolie mindestens eine weitere der Metallisierungsschichten aufgebracht ist und die Metallisierungsschichten derart auf der ersten und zweiten Folienseite der metallisierten Dielektrikumsfolie angeordnet sind, dass zwischen den Metallisierungsschichten der beiden Folienseiten mindestens eine erste Überlappung mit einer ersten Teilkapazität und eine zweite Überlappung mit einer zweiten Teilkapazität ausgebildet sind und die Teilkapazitäten eine Reihenschaltung bilden.

Die Anordnung der Metallisierungsschichten auf den beiden Folienseiten der metallisierten Dielektrikumsfolie, mittels der die Überlappungen der Metallisierungsschichten und damit die Teilkondensatoren ausbildet sind, hat den Vorteil, dass sich Teilentladungen an den Metallisierungsschichten und daraus ggf. entstehende Spannungsdurchbrüche zwischen unterschiedlichen Potentialen der Metallisierungsschichten zumindest deutlich reduzieren lassen. Metallisierungsschichten sind dabei vorzugsweise gegeneinander elektrisch isoliert.

Auch kann durch die Bildung der Teilkondensatoren unmittelbar an der metallisierten Dielektrikumsfolie des Folienkondensators auf bisher oftmals eingesetzte Trägerfolien, welche keine metallisierte Dielektrikumsfolien sind, verzichtet werden. Das spart vorteilhaft Gewicht und reduziert das Gesamtvolumen des Folienkondensators bei annähernd vergleichbaren oder gleichbleibenden Kapazitätswerten.

Vorteilhafte Ausgestaltungsformen des Folienkondensators sind in den abhängigen Ansprüchen angegeben.

Bei einer ersten vorteilhaften Ausgestaltungsform des Folienkondensators ist die erste Metallisierungsschicht mit der ersten Kontaktschicht und die zweite Metallisierungsschicht mit der zweiten Kontaktschicht elektrisch kontaktiert und ist die dritte Metallisierungsschicht elektrisch kontaktlos gegenüber der ersten und zweiten Kontaktschicht ausgebildet.

Diese elektrisch kontaktlose Metallisierungsschicht ermöglicht einen verbesserte Aufbautechnik insbesondere auch in Bezug auf die elektrischen Eigenschaften des Kondensators gegenüber herkömmlichen Folienkondensatoren mit nur zwei Metallisierungsschichten auf einer metallisierten Dielektrikumsfolie.

Bei einer weiteren vorteilhaften Ausgestaltungsform des Folienkondensators sind die erste und zweite Metallisierungsschicht auf der ersten Folienseite der metallisierten Dielektrikumsfolie aufgebracht, ist die dritte Metallisierungsschicht auf der zweiten Folienseite der metallisierten Dielektrikumsfolie aufgebracht, ist die erste Überlappung zwischen der ersten und dritten Metallisierungsschicht der ersten und zweiten Folienseiten der metallisierten Dielektrikumsfolie ausgebildet und ist die zweite Überlappung zwischen der zweiten und dritten Metallisierungsschicht der ersten und zweiten Folienseiten der metallisierten Dielektrikumsfolie ausgebildet.

Falls eine Anordnung der ersten und zweiten Metallisierungsschicht auf der ersten Folienseite, und deren Kontaktierung mit der ersten und zweiten Kontaktschicht, auch bei weiteren, zusätzlich auf die beiden Folienseiten aufgebrachten Metallisierungsschichten in vorteilhafter Weise beibehalten werden soll, sind Metallisierungsschichten mittels einer mathematischen Reihe in einer Gesamtanzahl von z.B. 5 oder 7 oder 9 oder 11 - und so weiter - Metallisierungsschichten auf die erste und die zweite Folienseite der metallisierten Dielektrikumsfolie aufzutragen.

Dabei ist in abwechselnder Reihenfolge der Auftragung der ersten, zweiten und dritten Metallisierungsschichten nach der dritten Metallisierungsschicht zu folgend.

Bei einer weiteren vorteilhaften Ausgestaltungsform des Folienkondensators ist eine vierte Metallisierungsschicht auf der ersten oder zweiten Folienseite der metallisierten Dielektrikumsfolie aufgebracht, ist die vierte Metallisierungsschicht elektrisch kontaktlos gegenüber der ersten, zweiten und dritten Metallisierungsschicht ausgebildet und ist mittels der vierten Metallisierungsschicht zwischen den Metallisierungsschichten (der ersten und zweiten Folienseiten der metallisierten Dielektrikumsfolie eine dritte Überlappung mit einer dritten Teilkapazität ausgebildet und ist die Reihenschaltung aus erster und zweiter Teilkapazität um die dritte Teilkapazität erweitert.

Die Erweiterung der Kapazität auf der einen metallisierten Dielektrikumsfolie ist mit Ausbildung der dritten Überlappung und Bildung der dritten Teilkapazität in vorteilhafter Weise möglich.

Bei einer weiteren vorteilhaften Ausgestaltungsform des Folienkondensators sind die erste und die vierte Metallisierungsschicht auf der ersten Folienseite der metallisierten Dielektrikumsfolie aufgebracht, sind die zweite und dritte Metallisierungsschicht auf der zweiten Folienseite der metallisierten Dielektrikumsfolie aufgebracht, ist die zweite Überlappung zwischen der jeweiligen dritten und vierten Metallisierungsschicht der ersten und zweiten Folienseiten der metallisierten Dielektrikumsfolie ausgebildet und ist die dritte Überlappung zwischen der jeweiligen zweiten und vierten Metallisierungsschicht der ersten und zweiten Folienseiten der metallisierten Dielektrikumsfolie ausgebildet.

Falls eine Anordnung der ersten Metallisierungsschicht auf der ersten Folienseite und der zweiten Metallisierungsschicht auf der zweiten Folienseite, und deren Kontaktierung mit der ersten und zweiten Kontaktschicht, auch bei weiteren, zusätzlich auf die beiden Folienseiten aufgebrachten Metallisierungsschichten in vorteilhafter Weise beibehalten werden soll, sind Metallisierungsschichten mittels einer mathematischen Reihe in einer Gesamtanzahl von z.B. 6 oder 8 oder 10 oder 12 - und so weiter - Metallisierungsschichten auf die erste und die zweite Folienseite der metallisierten Dielektrikumsfolie aufzutragen.

Dabei ist in abwechselnder Reihenfolge der Auftragung der ersten, zweiten, dritten und Metallisierungsschichte nach der vierten Metallisierungsschicht zu folgend.

Bei einer weiteren vorteilhaften Ausgestaltungsform des Folienkondensators weist die erste Kontaktschicht einen ersten elektrischen Anschluss und die zweite Kontaktschicht einen zweiten elektrischen Anschluss auf.

Mittels der Anschlüsse kann der Folienkondensator in vorteilhafter Weise beispielsweise in einem Filter elektrisch verschaltet werden.

Bei einer weiteren vorteilhaften Ausgestaltungsform des Folienkondensators weist der Folienkondensator mindestens eine erste und zweite metallisierte Dielektrikumsfolie auf, welche aufeinanderfolgend angeordnet und jeweils als metallisierte Dielektrikumsfolien ausgebildet sind.

Bei einer weiteren vorteilhaften Ausgestaltungsform des Folienkondensators sind die jeweiligen Metallisierungsschichten der ersten und zweiten metallisierten Dielektrikumsfolien derart ausgebildet, dass die erste Metallisierungsschicht der ersten metallisierten Dielektrikumsfolie in Bezug zur ersten Metallisierungsschicht der zweiten metallisierten Dielektrikumsfolie gegenüberliegt und/oder die zweite Metallisierungsschicht der ersten metallisierten Dielektrikumsfolie in Bezug zur zweiten Metallisierungsschicht der zweiten metallisierten Dielektrikumsfolie gegenüberliegt und/oder die dritte Metallisierungsschicht der ersten metallisierten Dielektrikumsfolie in Bezug zur dritten Metallisierungsschicht der zweiten metallisierten Dielektrikumsfolie gegenüberliegt und/oder, falls vorhanden, die vierte Metallisierungsschicht der ersten metallisierten Dielektrikumsfolie in Bezug zur, falls vorhanden, vierten Metallisierungsschicht der zweiten metallisierten Dielektrikumsfolie gegenüberliegt.

Als vorteilhaft erweist es sich, wenn die jeweils gegenüberliegenden ersten und zweiten Metallisierungsschichten der aufeinanderfolgend angeordneten ersten und zweiten metallisierten Dielektrikumsfolie mit jeweils derselben Kontaktschicht kontaktiert sind.

Durch die gegenüberliegende Anordnung zweier Metallisierungsschichten, welche aufgrund der Kontaktierung mit derselben Kontaktschicht auf gleichem elektrischem Potential liegen, sind zumindest zwischen diesen Metallisierungsschichten in einem möglichen Luftspalt Spannungsüberschläge im Wesentlichen ausgeschlossen.

Vergleichbar ist dieser Vorteil auch für die jeweils gegenüberliegende Anordnung der dritten und vierten Metallisierungsschichten der ersten und zweiten metallisierten Dielektrikumsfolie, welche jeweils kontaktlos gegenüber der ersten und zweiten Kontaktschicht ausgebildet sind.

Bei einer weiteren vorteilhaften Ausgestaltungsform des Folienkondensators verjüngen sich die Dicken der ersten oder zweiten Metallisierungsschichten der ersten und zweiten metallisierten Dielektrikumsfolien von den mit ihnen kontaktierten Kontaktschichten weg entlang ihrer Auftragungslänge.

Bei einer weiteren vorteilhaften Ausgestaltungsform des Folienkondensators verjüngen sich die Dicken der dritten oder vierten Metallisierungsschichten der ersten und zweiten metallisierten Dielektrikumsfolien jeweils in Richtung der Kontaktschichten hin entlang ihrer Auftragungslänge.

Folgende Betrachtungen sind Grundlage für die vorteilhafte Wirkung der sich verjüngenden Dicken der jeweiligen Metallisierungsschichten:
An einer Stelle, an welcher aufgrund von Materialunebenheiten die erste metallisierte Dielektrikumsfolie mit ihren Metallisierungsschichten einen geringeren Abstand zu der aufeinanderfolgenden zweiten metallisierten Dielektrikumsfolien mit ihren Metallisierungsschichten aufweist, kann, insbesondere bei Vorliegen eines unterschiedlichen Potentials der sich gegenüberliegenden Metallisierungsschichten und einem Anlegen einer hinreichend hohen Wechselspannung, ein sich periodisch widerholender Spannungsüberschlag stattfinden, welcher an der Stelle des Spannungsüberschlages eine gewünscht feine Oxidationsschicht auf einer der Metallisierungsschichten entfernen kann.

Die Oxidation dringt nach und nach tiefer in diese Metallisierungsschicht ein, was zudem zu einem leichten Abtragen derselben Oxidationsschicht an dieser Stelle führt. Der Abstand zu der gegenüberliegenden Metallisierungsschicht vergrößert sich und hierdurch wird ein Spannungsüberschlag an einer anderen Stelle der Metallisierungsschicht energetisch günstiger. Die Metallisierungsschichten werden so nach und nach unregelmäßig, jedoch flächig abgetragen, was den Flächenwiderstand der Folie erhöht.

Im Bereich der Kontaktierung der ersten oder zweiten Metallisierungsschichten der ersten und zweiten metallisierten Dielektrikumsfolie mit den Kontaktschichten, wo der Fluss der Ladungsträger am größten ist, führt die Erhöhung des Flächenwiderstands zu einer deutlich stärkeren Erhöhung des parasitären Gesamtwiderstands des Kondensators (ESR) als auf den jeweils gegenüberliegenden Metallisierungsschichten, auf welchen der Ladungsträgerfluss gering ist. Diese Erhöhung ist in erster Näherung umgekehrt proportional zur Abnahme der Schichtdicke der Metallisierungsschichten.

Bei gleichbleibendem Strom I nimmt entsprechend die Verlustleistung *P = RI²* zu, welche in Wärme umgesetzt wird. Verjüngt sich nun die Dicke der Metallisierungsschichten, so hat die flächige Abtragung bzw. Oxidation der freien Oberfläche der sich gegenüberliegenden Metallisierungsschichten zur Folge, dass die kapazitiv aktive Fläche einer der sich gegenüberliegenden Metallisierungsschichten beginnend sukzessiv abzunehmen. Zudem kann stellenweise die Metallisierung vollständig oxidiert werden, wobei dies infolge der Verjüngung zuerst fernab der Kontaktschicht stattfindet. Durch die Abnahme der kapazitiv aktiven Fläche wird die Kapazität C des Folienkondensators reduziert, und somit nach *I = C·dU*/*dt* auch der Strom I durch den Folienkondensator. Durch eine Verjüngung des Profils der Metallisierungsschicht kann die Verlustleistung *P = RI²* daher während des oxidationsbedingten Degradationsprozesses der Metallisierungsschichten beschränkt werden, wodurch ein unkontrolliertes Erhitzen der metallisierten Dielektrikumsfolien durch eine kritisch erhöhte Verlustleistung verhindert werden kann.

Bei einer weiteren vorteilhaften Ausgestaltungsform des Folienkondensators weist jeweils mindestens eine der ersten Metallisierungsschichten der aufeinanderfolgend angeordneten ersten und zweiten metallisierten Dielektrikumsfolien an deren erster Stirnseite eine oder mehrere erste Aussparungen zur Verbindung mit der ersten Kontaktschicht auf und/oder weist jeweils mindestens eine der zweiten Metallisierungsschichten der aufeinanderfolgend angeordneten ersten und zweiten metallisierten Dielektrikumsfolien an deren zweiter Stirnseite eine oder mehrere zweite Aussparungen zur Verbindung mit der ersten Kontaktschicht auf.

Bei einer weiteren vorteilhaften Ausgestaltungsform des Folienkondensators weisen mindestens jeweils eine der aufeinanderfolgend angeordneten ersten und zweiten metallisierten Dielektrikumsfolien an deren erster Stirnseite eine oder mehrere dritte Aussparungen zur Verbindung mit der ersten Kontaktschicht auf und/oder weisen mindestens jeweils eine der aufeinanderfolgend angeordneten ersten und zweiten metallisierten Dielektrikumsfolien an deren zweiter Stirnseite eine oder mehrere vierte Aussparungen zur Verbindung mit der zweiten Kontaktschicht auf.

Die Aussparungen haben den Vorteil, dass sich zwischen den ersten und zweiten Metallisierungsschichten und den jeweiligen Kontaktschichten eine elektrisch bessere niederohmige Verbindung herstellen lässt, wobei die Aussparungen an den ersten und zweiten Metallisierungsschichten mit den Kontaktschichten eine größere Kontaktierungsfläche für die elektrische Verbindung ausbilden, als eine Lösung ohne die Aussparungen an den ersten und zweiten Metallisierungsschichten. Auch geben die Aussparrungen einen besseren Halt für die mechanische Verbindung von erster und zweiter Metallisierungsschicht mit der jeweiligen Kontaktschicht.

Bei einer weiteren vorteilhaften Ausgestaltungsform des Folienkondensators ist zwischen den zwei metallisierten Dielektrikumsfolien eine unmetallisierte Dielektrikumsfolie angeordnet, weist die unmetallisierte Dielektrikumsfolie eine dritte und vierte Stirnseite auf und ist die dritte Stirnseite der unmetallisierten Dielektrikumsfolie mit der ersten Kontaktschicht und die vierte Stirnseite der unmetallisierten Dielektrikumsfolie mit der zweiten Kontaktschicht verbunden.

Die beiden aufeinanderfolgenden metallisierten Dielektrikumsfolien weisen an ihren jeweils gegenüberliegenden Metallisierungsschichten oftmals eine Rauigkeit auf, die bei einer Verkeilen dazu führen könnte, dass sich an der Stelle der Verkeilung die Metallisierung löst und dadurch ein Luftspalt gebildet wird, welcher Teilentladungen verursachen kann. Dies verhindert die unmetallisierte Dielektrikumsfolie, welche zwischen den zwei metallisierten Dielektrikumsfolien angeordnet ist, in vorteilhafter Weise.

Für die Lösung der Aufgabe wird ebenfalls ein Filter mit dem erfindungsgemäßen Folienkondensator vorgeschlagen.

Der Einsatz des Folienkondensators in dem Filter erhöht die Gesamtverfügbarkeit des Filters, da mittels des Folienkondensators Teilentladungen verringert werden können. Auch ist eine Gewichtsreduzierung und eine Reduzierung des Bauraumes für den Folienkondensator möglich, was das Gesamtgewicht und die Gesamtgröße des Filters ebenfalls im Sinne einer Reduzierung positiv beeinflusst.

Für die Lösung der Aufgabe wird weiterhin ein Umrichter vorgeschlagen, welcher den erfindungsgemäßen Filter zum Betrieb einer elektrischen Maschine an einem elektrischen Netz umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung eines erfindungsgemäßen Folienkondensators,
- FIG 2: eine zweite schematische Darstellung mit einem ersten Ausführungsbeispiel des Folienkondensators nach FIG 1,
- FIG 3: eine dritte schematische Darstellung mit einem zweiten Ausführungsbeispiel des Folienkondensators auf Basis der FIG 1,
- FIG 4: eine vierte schematische Darstellung mit einem dritten Ausführungsbeispiel des Folienkondensators nach FIG 1, wobei verschiedene Sichtebenen auf eine zweite metallisierte Dielektrikumsfolie des Folienkondensators gelegt sind,
- FIG 5: eine fünfte schematische Darstellung mit einem vierten Ausführungsbeispiel des Folienkondensators nach FIG 1, wobei verschiedene Sichtebenen auf eine erste metallisierte Dielektrikumsfolie des Folienkondensators gelegt sind und
- FIG 6: eine sechste schematische Darstellung einen Umrichter, welcher einen Filter mit dem erfindungsgemäßen Folienkondensator aufweist.

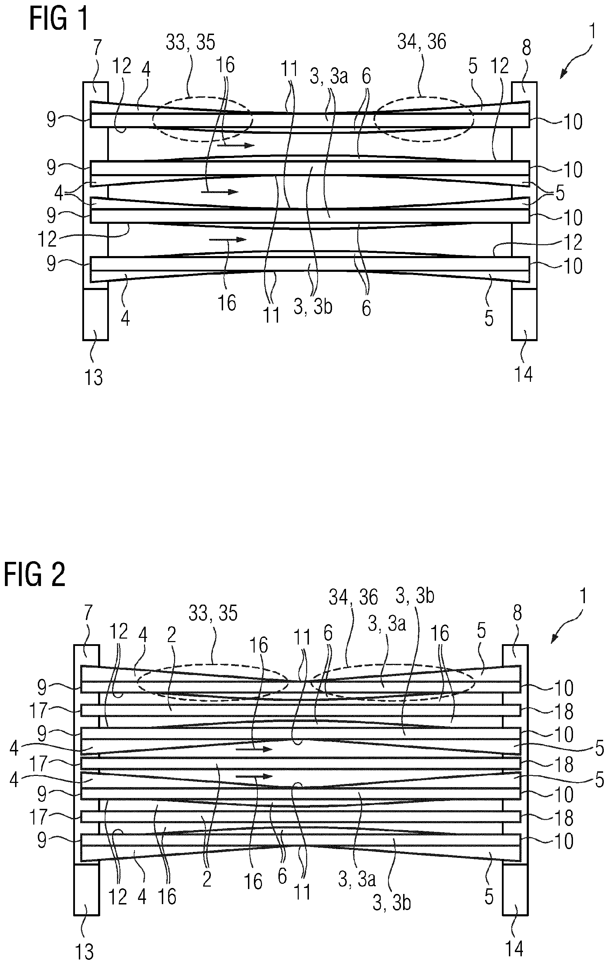

FIG 1 zeigt eine erste schematische Darstellung eines erfindungsgemäßen Folienkondensators 1.

Es sind vier metallisierte Dielektrikumsfolien 3 dargestellt, welche jeweils mittels ihrer ersten Stirnseiten 9 mit einer ersten Kontaktschicht 7 und jeweils mittels ihrer zweiten Stirnseiten 10 mit einer zweiten Kontaktschicht 8 zumindest mechanisch verbunden sind. Dazu weist die erste Kontaktschicht 7 einen ersten elektrischen Anschluss 13 und die zweite Kontaktschicht 8 einen zweiten elektrischen Anschluss 14 auf.

Die vier metallisierten Dielektrikumsfolien 3 weisen jeweils an einer ersten Folienseite 11 eine erste und zweite Metallisierungsschicht 4,5 und an einer zweiten Folienseite 12 eine dritte Metallisierungsschicht 6 auf.

Die erste Metallisierungsschicht 4 der vier metallisierten Dielektrikumsfolien 3 ist jeweils mit der ersten Kontaktschicht 7 elektrisch verbunden und die zweite Metallisierungsschicht 5 der vier metallisierten Dielektrikumsfolien 3 ist jeweils mit der zweiten Kontaktschicht 8 elektrisch verbunden.

Die dritte Metallisierungsschicht 6 der vier metallisierten Dielektrikumsfolien 3 ist jeweils kontaktlos in Bezug zu der ersten und zweiten Kontaktschicht 7,8 angeordnet.

Es sind drei Paare mit jeweils einer ersten und zweiten metallisierten Dielektrikumsfolie 3a,3b dargestellt, wobei die ersten und zweiten metallisierten Dielektrikumsfolien 3a,3b der drei Paare aufeinanderfolgend angeordnet sind und jeweils als metallisierte Dielektrikumsfolien 3 ausgebildet sind.

Von den drei Paaren liegen sich bei zwei Paaren jeweils zwei dritte Metallisierungsschichten 6 und in dem dritten Paar jeweils zwei erste und zweite Metallisierungsschichten 4,5 gegenüber.

Zwischen den ersten und zweiten metallisierten Dielektrikumsfolie 3a,3b der drei Paare ist jeweils ein Luftspalt 16 ausgebildet.

Die Dicken der ersten und zweiten Metallisierungsschichten 4,5 der drei Paare der ersten und zweiten metallisierten Dielektrikumsfolien 3a,3b verjüngen sich von den mit ihnen kontaktierten Kontaktschichten 7,8 weg entlang ihrer Auftragungslänge.

Die Dicke der dritten Metallisierungsschichten 6 der drei Paare der ersten und zweiten metallisierten Dielektrikumsfolien 3a,3b verjüngen sich jeweils in Richtung der Kontaktschichten 7,8 hin entlang ihrer Auftragungslänge.

Exemplarisch ist an einer der ersten metallisierten Dielektrikumsfolien 3a eine erste Überlappung 33 mit einer ersten Teilkapazität 35 zwischen der ersten Metallisierungsschicht 4 und der dritten Metallisierungsschicht 6 sowie eine zweite Überlappung 34 zwischen der zweiten Metallisierungsschicht 5 und der dritten Metallisierungsschicht 6 mit einer zweiten Teilkapazität 36 ausgebildet, wobei die beiden Teilkapazitäten 35,36 eine Reihenschaltung bilden.

In FIG 2 ist eine zweite schematische Darstellung mit einem ersten Ausführungsbeispiel des Folienkondensators 1 nach FIG 1 aufgezeigt.

FIG 2 entspricht der FIG 1, wobei zwischen jeder der metallisierten Dielektrikumsfolien 3 eine unmetallisierte Dielektrikumsfolie 2 angeordnet ist.

Die unmetallisierten Dielektrikumsfolien 2 sind an ihrer dritten Stirnseite 17 mit der ersten Kontaktschicht 7 und mit ihrer vierten Stirnseite 18 mit der zweiten Kontaktschicht 8 zumindest mechanisch verbunden.

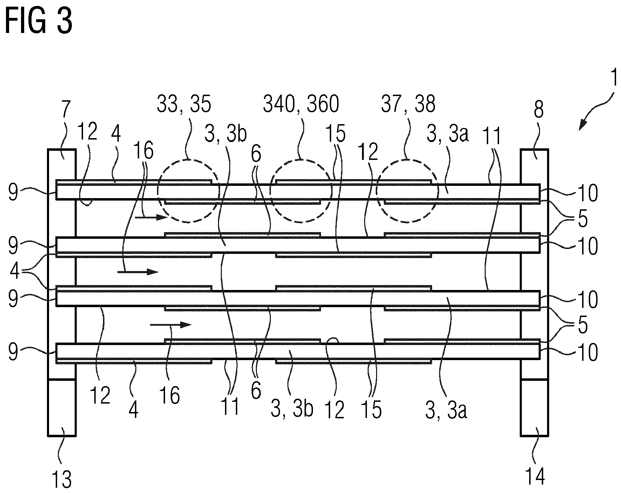

Mittels FIG 3 wird in einer dritten schematischen Darstellung ein zweites Ausführungsbeispiel des Folienkondensators 1 auf Basis der FIG 1 gezeigt.

Auch in FIG 3 sind vier metallisierte Dielektrikumsfolien 3 dargestellt, welche jeweils mittels ihrer ersten Stirnseiten 9 mit einer ersten Kontaktschicht 7 und jeweils mittels ihrer zweiten Stirnseiten 10 mit einer zweiten Kontaktschicht 8 zumindest mechanisch verbunden sind. Dazu weist die erste Kontaktschicht 7 einen ersten elektrischen Anschluss 13 und die zweite Kontaktschicht 8 einen zweiten elektrischen Anschluss 14 auf.

Die vier metallisierten Dielektrikumsfolien 3 weisen jeweils an einer ersten Folienseite 11 eine erste und vierte Metallisierungsschicht 4,15 und an einer zweiten Folienseite 12 eine zweite und dritte Metallisierungsschicht 5,6 auf.

Die erste Metallisierungsschicht 4 der vier metallisierten Dielektrikumsfolien 3 ist jeweils mit der ersten Kontaktschicht 7 elektrisch verbunden und die zweite Metallisierungsschicht 5 der vier metallisierten Dielektrikumsfolien 3 ist jeweils mit der zweiten Kontaktschicht 8 elektrisch verbunden.

Die dritte und vierte Metallisierungsschicht 6,15 der vier metallisierten Dielektrikumsfolien 3 sind jeweils kontaktlos in Bezug zu der ersten und zweiten Kontaktschicht 7,8 angeordnet.

Es sind drei Paare mit jeweils einer ersten und zweiten metallisierten Dielektrikumsfolie 3a,3b dargestellt, wobei die ersten und zweiten metallisierten Dielektrikumsfolien 3a,3b der drei Paare aufeinanderfolgend angeordnet sind und jeweils als metallisierte Dielektrikumsfolien 3 ausgebildet sind.

Von den drei Paaren liegen sich bei zwei Paaren jeweils zwei zweite und dritte Metallisierungsschichten 5,6 und bei dem dritten Paar jeweils zwei erste und vierte Metallisierungsschichten 4,15 gegenüber.

Zwischen den ersten und zweiten metallisierten Dielektrikumsfolie 3a,3b der drei Paare ist jeweils ein Luftspalt 16 ausgebildet.

Auf eine verjüngte Darstellung der Metallisierungsschichten 4,5,6,15 der vier metallisierten Dielektrikumsfolien 3 wurde in FIG3 verzichtet, was nicht heißt, dass sie bei diesem Ausführungsbeispiel nicht vorkommen können.

Exemplarisch ist an einer der ersten metallisierten Dielektrikumsfolien 3a eine erste Überlappung 33 mit einer ersten Teilkapazität 35 zwischen der ersten Metallisierungsschicht 4 und der dritten Metallisierungsschicht 6, eine zweite Überlappung 340 zwischen der dritten Metallisierungsschicht 6 und der vierten Metallisierungsschicht 15 mit einer zweiten Teilkapazität 360 sowie eine dritte Überlappung 37 zwischen der vierten Metallisierungsschicht 15 und der zweiten Metallisierungsschicht 5 mit einer dritten Teilkapazität 38 ausgebildet, wobei die drei Teilkapazitäten 35,360,38 eine Reihenschaltung bilden.

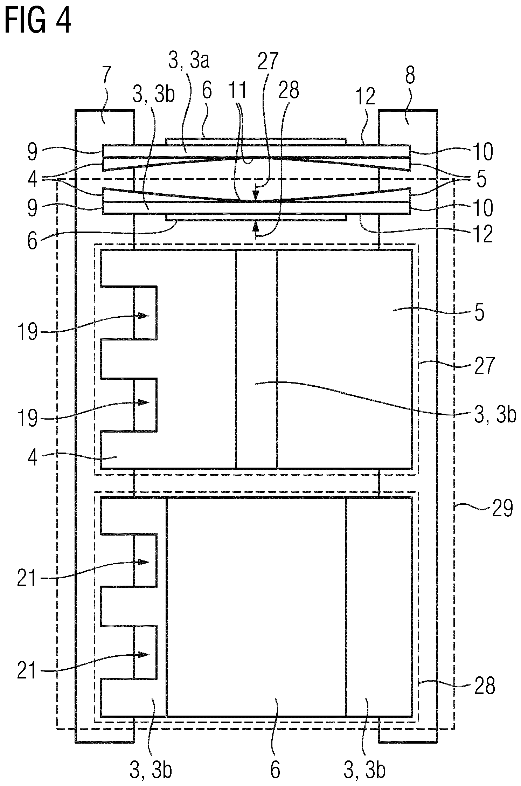

Die FIG 4 visualisiert in einer vierten schematischen Darstellung ein drittes Ausführungsbeispiel des Folienkondensators 1 nach FIG 1, wobei verschiedene Sichtebenen auf eine zweite metallisierte Dielektrikumsfolie 3b des Folienkondensators 1 gelegt sind.

Dargestellt sind in einer Querschnittssicht eine erste und eine zweite metallisierte Dielektrikumsfolie 3a,3b, welche aufeinanderfolgend angeordnet und jeweils als metallisierte Dielektrikumsfolien 3 ausgebildet sind.

Die erste und zweite metallisierte Dielektrikumsfolie 3a,3b sind jeweils mittels ihrer ersten Stirnseiten 9 mit einer ersten Kontaktschicht 7 und jeweils mittels ihrer zweiten Stirnseiten 10 mit einer zweiten Kontaktschicht 8 zumindest mechanisch verbunden.

Die zwei Dielektrikumsfolien 3a,3b weisen jeweils an einer ersten Folienseite 11 eine erste und zweite Metallisierungsschicht 4,5 und an einer zweiten Folienseite 12 eine dritte Metallisierungsschicht 6 auf.

Die erste Metallisierungsschicht 4 der zwei Dielektrikumsfolien 3a,3b ist jeweils mit der ersten Kontaktschicht 7 elektrisch verbunden und die zweite Metallisierungsschicht 5 zwei Dielektrikumsfolien 3a,3b ist jeweils mit der zweiten Kontaktschicht 8 elektrisch verbunden.

Die dritte Metallisierungsschicht 6 der zwei Dielektrikumsfolien 3a,3b ist jeweils kontaktlos in Bezug zu der ersten und zweiten Kontaktschicht 7,8 angeordnet.

Die jeweils zwei ersten und zweiten Metallisierungsschichten 4,5 der zwei Dielektrikumsfolien 3a,3b liegen sich gegenüber.

Die Dicken der ersten und zweiten Metallisierungsschichten 4,5 der ersten und zweiten metallisierten Dielektrikumsfolien 3a,3b verjüngen sich von den mit ihnen kontaktierten Kontaktschichten 7,8 weg entlang ihrer Auftragungslänge.

Die Dicken der dritten Metallisierungsschichten 6 der ersten und zweiten metallisierten Dielektrikumsfolien 3a,3b verjüngen sich jeweils in Richtung der Kontaktschichten 7,8 hin entlang ihrer Auftragungslänge.

Mit Blick auf die zweite metallisierte Dielektrikumsfolie 3b wurde eine erste Gesamtsicht 29 gewählt, welche neben der Querschnittssicht der zweiten metallisierten Dielektrikumsfolie 3b auch in einer ersten Sicht 27 eine Draufsicht der zweiten metallisierten Dielektrikumsfolie 3b und in einer zweiten Sicht 28 eine Untersicht der zweite metallisierten Dielektrikumsfolie 3b aufzeigt. Diese beiden Sichten 27,28 sind auch mittels eines Pfeils für die erste Sicht 27 als Draufsicht und eines weiteren Pfeils für die zweite Sicht 28 als Untersicht an der Querschnittssicht der zweiten metallisierten Dielektrikumsfolie 3b visualisiert.

Die erste Sicht 27 als Draufsicht der zweite metallisierten Dielektrikumsfolie 3b zeigt die erste Metallisierungsschicht 4, welche mittels zweier erster Aussparungen 19 mit der ersten Kontaktschicht 7 elektrisch und mechanisch verbunden ist.

Die zweite metallisierten Dielektrikumsfolie 3b weist an der Stelle der zwei ersten Aussparungen 19 der erste Metallisierungsschicht 4 ebenfalls Aussparrungen auf, welche aber verdeckt hinter den zwei ersten Aussparungen 19 der erste Metallisierungsschicht 4 sind.

Die zweite Metallisierungsschicht 5 ist mit der zweiten Kontaktschicht 8 elektrisch und mechanisch verbunden und weist in diesem Ausführungsbeispiel keine Aussparrungen auf.

Die zweite Sicht 28 als Untersicht der zweiten metallisierten Dielektrikumsfolie 3b zeigt die dritte Metallisierungsschicht 6, welche elektrisch kontaktlos zur ersten und zweiten Kontaktschicht 7,8 angeordnet ist.

Die zweite metallisierte Dielektrikumsfolie 3b ist mittels zweier dritter Aussparungen 21 mit der ersten Kontaktschicht 7 zumindest mechanisch verbunden.

Die Aussparrungen der ersten Metallisierungsschicht weist an der Stelle der zwei dritten Aussparungen 21 der zweiten metallisierten Dielektrikumsfolie 3b ebenfalls Aussparrungen auf, welche aber verdeckt hinter den zwei dritten Aussparungen 21 der zweiten metallisierten Dielektrikumsfolie 3b sind.

Die zweite metallisierte Dielektrikumsfolie 3b ist mit der zweiten Kontaktschicht 8 zumindest mechanisch verbunden und weist in diesem Ausführungsbeispiel keine Aussparrungen auf.

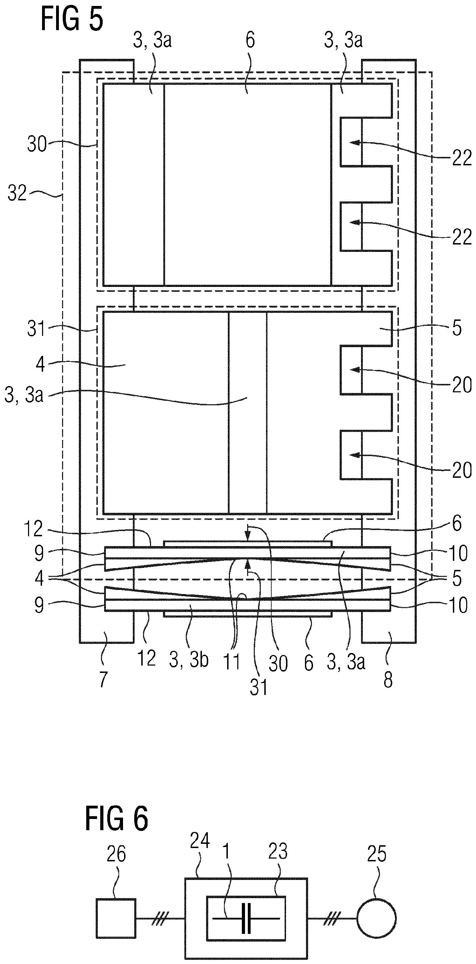

Die FIG 5 visualisiert in einer fünften schematischen Darstellung ein viertes Ausführungsbeispiel des Folienkondensators 1 nach FIG 1 und FIG 4, wobei verschiedene Sichtebenen auf eine erste metallisierte Dielektrikumsfolie 3a des Folienkondensators 1 gelegt sind.

Die FIG 5 zeigt die gleiche Darstellung der ersten und zweiten metallisierten Dielektrikumsfolien 3a,3b wie FIG 4, nur in einer anderen Perspektive.

Dargestellt sind in der Querschnittssicht die erste und zweite metallisierte Dielektrikumsfolie 3a,3b, welche aufeinanderfolgend angeordnet und jeweils als metallisierte Dielektrikumsfolien 3 ausgebildet sind.

Die erste und zweite metallisierte Dielektrikumsfolie 3a,3b sind jeweils mittels ihrer ersten Stirnseiten 9 mit der ersten Kontaktschicht 7 und jeweils mittels ihrer zweiten Stirnseiten 10 mit der zweiten Kontaktschicht 8 zumindest mechanisch verbunden.

Die zwei Dielektrikumsfolien 3a,3b weisen jeweils an der ersten Folienseite 11 die erste und zweite Metallisierungsschicht 4,5 und an der zweiten Folienseite 12 die dritte Metallisierungsschicht 6 auf.

Die erste Metallisierungsschicht 4 der zwei Dielektrikumsfolien 3a,3b ist jeweils mit der ersten Kontaktschicht 7 elektrisch verbunden und die zweite Metallisierungsschicht 5 der zwei Dielektrikumsfolien 3a,3b ist jeweils mit der zweiten Kontaktschicht 8 elektrisch verbunden.

Die dritte Metallisierungsschicht 6 der zwei Dielektrikumsfolien 3a,3b ist jeweils kontaktlos in Bezug zu der ersten und zweiten Kontaktschicht 7,8 angeordnet.

Die jeweils zwei ersten und zweiten Metallisierungsschichten 4,5 der zwei Dielektrikumsfolien 3a,3b liegen sich gegenüber.

Die Dicken der ersten und zweiten Metallisierungsschichten 4,5 der ersten und zweiten metallisierten Dielektrikumsfolien 3a,3b verjüngen sich von den mit ihnen kontaktierten Kontaktschichten 7,8 weg entlang ihrer Auftragungslänge.

Die Dicken der dritten Metallisierungsschichten 6 der ersten und zweiten metallisierten Dielektrikumsfolien 3a,3b verjüngen sich jeweils in Richtung der Kontaktschichten 7,8 hin entlang ihrer Auftragungslänge.

Mit Blick auf die erste metallisierte Dielektrikumsfolie 3a wurde eine zweite Gesamtsicht 32 gewählt, welche neben der Querschnittssicht der ersten metallisierten Dielektrikumsfolie 3a auch in einer dritten Sicht 30 eine Draufsicht der ersten metallisierten Dielektrikumsfolie 3a und in einer vierten Sicht 31 eine Untersicht der ersten metallisierten Dielektrikumsfolie 3a aufzeigt. Diese beiden Sichten 30,31 sind auch mittels eines Pfeils für die dritte Sicht 30 als Draufsicht und eines weiteren Pfeils für die vierte Sicht 31 als Untersicht an der Querschnittssicht der ersten metallisierten Dielektrikumsfolie 3a visualisiert.

Die dritte Sicht 30 als Draufsicht der ersten metallisierten Dielektrikumsfolie 3a zeigt die dritte Metallisierungsschicht 6, welche elektrisch kontaktlos zur ersten und zweiten Kontaktschicht 7,8 angeordnet ist.

Die erste metallisierte Dielektrikumsfolie 3a ist mittels zweier vierter Aussparungen 22 mit der zweiten Kontaktschicht 8 zumindest mechanisch verbunden.

Die Aussparrungen der zweiten Metallisierungsschicht weist an der Stelle der zwei vierten Aussparungen 22 der ersten metallisierten Dielektrikumsfolie 3a ebenfalls Aussparrungen auf, welche aber verdeckt hinter den zwei vierten Aussparungen 22 der ersten metallisierten Dielektrikumsfolie 3a sind.

Die erste metallisierte Dielektrikumsfolie 3a ist mit der zweiten Kontaktschicht 7 zumindest mechanisch verbunden und weist in diesem Ausführungsbeispiel keine Aussparrungen auf.

Die vierte Sicht 31 als Untersicht der ersten metallisierten Dielektrikumsfolie 3a zeigt die zweite Metallisierungsschicht 5, welche mittels zweier zweiter Aussparungen 20 mit der zweiten Kontaktschicht 8 elektrisch und mechanisch verbunden ist.

Die erste metallisierte Dielektrikumsfolie 3a weist an der Stelle der zwei zweiten Aussparungen 20 der zweiten Metallisierungsschicht 5 ebenfalls Aussparrungen auf, welche aber verdeckt hinter den zwei zweiten Aussparungen 20 der zweiten Metallisierungsschicht 5 sind.

Die erste Metallisierungsschicht 4 ist mit der zweiten Kontaktschicht 8 elektrisch und mechanisch verbunden und weist in diesem Ausführungsbeispiel keine Aussparrungen auf.

Die FIG 6 zeigt in einer sechsten schematischen Darstellung einen Umrichter 24, welcher einen Filter 23 mit dem erfindungsgemäßen Folienkondensator 1 aufweist.

Der Filter 23 kann in den Umrichter 24 integriert sein oder beispielsweise auch zwischen dem elektrischen Netz 26 und dem Umrichter 24 oder der elektrischen Maschine 25 und dem Umrichter 24 elektrisch verschaltet sein. In FIG 6 ist das beispielhaft eine Verschaltung in einem Drehstromsystem.

Der Umrichter 24 ist mit einem elektrischen Netz 26 verbunden und betreibt elektrische Maschine 25.

## Patentansprüche

1. Folienkondensator (1), umfassend
- wenigstens eine metallisierte Dielektrikumsfolie (3) mit einer ersten und zweiten Stirnseite (9, 10) und mit einer ersten und zweiten Folienseite (11,12) und
- eine erste und zweite Kontaktschicht (7,8),
wobei
- die erste Stirnseite (9) der metallisierten Dielektrikumsfolie (3) mit der ersten Kontaktschicht (7) und die zweite Stirnseite (10) der metallisierten Dielektrikumsfolie (3) mit der zweiten Kontaktschicht (8) verbunden ist und
- die metallisierte Dielektrikumsfolie (3) mindestens eine erste, zweite und dritte Metallisierungsschicht (4,5,6) aufweist,
**dadurch gekennzeichnet, dass**
- auf der ersten Folienseite (11) der metallisierten Dielektrikumsfolie (3) mindestens zwei der Metallisierungsschichten (4,5,6) aufgebracht sind und auf der zweiten Folienseite (12) der metallisierten Dielektrikumsfolie (3) mindestens eine weitere der Metallisierungsschichten (4,5,6) aufgebracht ist und
- die Metallisierungsschichten (4,5,6) derart auf der ersten und zweiten Folienseite (11,12) der metallisierten Dielektrikumsfolie (3) angeordnet sind, dass zwischen den Metallisierungsschichten (4,5,6) der beiden Folienseiten (11,12) mindestens eine erste Überlappung (33) mit einer ersten Teilkapazität (35) und eine zweite Überlappung (34,340) mit einer zweiten Teilkapazität (36,360) ausgebildet sind und die Teilkapazitäten (35,36,360) eine Reihenschaltung bilden.

2. Folienkondensator (1) nach Anspruch 1, wobei
- die erste Metallisierungsschicht (4) mit der ersten Kontaktschicht (7) und die zweite Metallisierungsschicht (5) mit der zweiten Kontaktschicht (8) elektrisch kontaktiert ist und
- die dritte Metallisierungsschicht (6) elektrisch kontaktlos gegenüber der ersten und zweiten Kontaktschicht (7,8) ausgebildet ist.

3. Folienkondensator (1) nach einem der Ansprüche 1 oder 2, wobei
- die erste und zweite Metallisierungsschicht (4,5) auf der ersten Folienseite (11) der metallisierten Dielektrikumsfolie (3) aufgebracht sind,
- die dritte Metallisierungsschicht (6) auf der zweiten Folienseite (12) der metallisierten Dielektrikumsfolie (3) aufgebracht ist,
- die erste Überlappung (33) zwischen der ersten und dritten Metallisierungsschicht (4,6) der ersten und zweiten Folienseiten (11,12) der metallisierten Dielektrikumsfolie (3) ausgebildet ist und
- die zweite Überlappung (34) zwischen der zweiten und dritten Metallisierungsschicht (5,6) der ersten und zweiten Folienseiten (11,12) der metallisierten Dielektrikumsfolie (3) ausgebildet ist.

4. Folienkondensator (1) nach einem der Ansprüche 1 oder 2, wobei
- eine vierte Metallisierungsschicht (15) auf der ersten oder zweiten Folienseite (11,12) der metallisierten Dielektrikumsfolie (3) aufgebracht ist,
- die vierte Metallisierungsschicht (15) elektrisch kontaktlos gegenüber der ersten, zweiten und dritten Metallisierungsschicht (4,5,6) ausgebildet ist und
- mittels der vierten Metallisierungsschicht (15) zwischen den Metallisierungsschichten (4,5,6,15) der ersten und zweiten Folienseiten (11,12) der metallisierten Dielektrikumsfolie (3) eine dritte Überlappung (37) mit einer dritten Teilkapazität (38) ausgebildet ist und die Reihenschaltung aus erster und zweiter Teilkapazität (35,360) um die dritte Teilkapazität (38) erweitert ist.

5. Folienkondensator (1) nach Anspruch 4, wobei
- die erste und die vierte Metallisierungsschicht (4,15) auf der ersten Folienseite (11) der metallisierten Dielektrikumsfolie (3) aufgebracht sind,
- die zweite und dritte Metallisierungsschicht (5,6) auf der zweiten Folienseite (12) der metallisierten Dielektrikumsfolie (3) aufgebracht sind,
- die zweite Überlappung (340) zwischen der dritten und vierten Metallisierungsschicht (6,15) der ersten und zweiten Folienseiten (11,12) der metallisierten Dielektrikumsfolie (3) ausgebildet ist und
- die dritte Überlappung (37) zwischen der zweiten und vierten Metallisierungsschicht (5,15) der ersten und zweiten Folienseiten (11,12) der metallisierten Dielektrikumsfolie (3) ausgebildet ist.

6. Folienkondensator (1) nach einem der vorhergehenden Ansprüche, wobei die erste Kontaktschicht (7) einen ersten elektrischen Anschluss (13) und die zweite Kontaktschicht (8) einen zweiten elektrischen Anschluss (14) aufweist.

7. Folienkondensator nach einem der vorhergehenden Ansprüche, aufweisend mindestens eine erste und zweite metallisierte Dielektrikumsfolie (3a,3b), welche aufeinanderfolgend angeordnet und jeweils als metallisierte Dielektrikumsfolien (3) ausgebildet sind.

8. Folienkondensator (1) nach Anspruch 7, wobei die jeweiligen Metallisierungsschichten (4,5,6,15) der ersten und zweiten metallisierten Dielektrikumsfolien (3a,3b) derart ausgebildet sind, dass
- die erste Metallisierungsschicht (4) der ersten metallisierten Dielektrikumsfolie (3a) in Bezug zur ersten Metallisierungsschicht (4) der zweiten metallisierten Dielektrikumsfolie (3b) gegenüberliegt und/oder
- die zweite Metallisierungsschicht (5) der ersten metallisierten Dielektrikumsfolie (3a) in Bezug zur zweiten Metallisierungsschicht (5) der zweiten metallisierten Dielektrikumsfolie (3b) gegenüberliegt und/oder
- die dritte Metallisierungsschicht (6) der ersten metallisierten Dielektrikumsfolie (3a) in Bezug zur dritten Metallisierungsschicht (6) der zweiten metallisierten Dielektrikumsfolie (3b) gegenüberliegt und/oder
- falls vorhanden, die vierte Metallisierungsschicht (15) der ersten metallisierten Dielektrikumsfolie (3a) in Bezug zur, falls vorhanden, vierten Metallisierungsschicht (15) der zweiten metallisierten Dielektrikumsfolie (3b) gegenüberliegt.

9. Folienkondensator (1) nach einem der Ansprüche 7 oder 8, wobei sich die Dicken der ersten oder zweiten Metallisierungsschichten (4,5) der ersten und zweiten metallisierten Dielektrikumsfolien (3a,3b) von den mit ihnen kontaktierten Kontaktschichten (7,8) weg entlang ihrer Auftragungslänge verjüngen.

10. Folienkondensator (1) nach einem der Ansprüche 7 bis 9, wobei sich die Dicken der dritten oder vierten Metallisierungsschichten (6,15) der ersten und zweiten metallisierten Dielektrikumsfolien (3a,3b) jeweils in Richtung der Kontaktschichten (7,8) hin entlang ihrer Auftragungslänge verjüngen.

11. Folienkondensator (1) nach einem der Ansprüche 7 bis 10, wobei
- jeweils mindestens eine der ersten Metallisierungsschichten (4) der aufeinanderfolgend angeordneten ersten und zweiten metallisierten Dielektrikumsfolien (3a,3b) an deren erster Stirnseite (9) eine oder mehrere erste Aussparungen (19) zur Verbindung mit der ersten Kontaktschicht (7) aufweisen und/oder
- jeweils mindestens eine der zweiten Metallisierungsschichten (5) der aufeinanderfolgend angeordneten ersten und zweiten metallisierten Dielektrikumsfolien (3a,3b) an deren zweiter Stirnseite (10) eine oder mehrere zweite Aussparungen (20) zur Verbindung mit der ersten Kontaktschicht (7) aufweisen.

12. Folienkondensator (1) nach einem der Ansprüche 7 bis 11, wobei
- mindestens jeweils eine der aufeinanderfolgend angeordneten ersten und zweiten metallisierten Dielektrikumsfolien (3a,3b) an deren erster Stirnseite (9) eine oder mehrere dritte Aussparungen (21) zur Verbindung mit der ersten Kontaktschicht (7) aufweisen und/oder
- mindestens jeweils eine der aufeinanderfolgend angeordneten ersten und zweiten metallisierten Dielektrikumsfolien (3a,3b) an deren zweiter Stirnseite (10) eine oder mehrere vierte Aussparungen (22) zur Verbindung mit der zweiten Kontaktschicht (8) aufweisen.

13. Folienkondensator (1) nach einem der Ansprüche 7 bis 12, wobei
- zwischen den zwei metallisierten Dielektrikumsfolien (3a,3b) eine unmetallisierte Dielektrikumsfolie (2) angeordnet ist,
- die unmetallisierte Dielektrikumsfolie (2) eine dritte und vierte Stirnseite (9, 10) aufweist und
- die dritte Stirnseite (17) der unmetallisierten Dielektrikumsfolie (2) mit der ersten Kontaktschicht (7) und die vierte Stirnseite (18) der unmetallisierten Dielektrikumsfolie (2) mit der zweiten Kontaktschicht (8) verbunden ist.

14. Filter (23) mit einem Folienkondensator (1) nach einem der Ansprüche 1 bis 13.

15. Umrichter (24), umfassend einen Filter (23) nach Anspruch 14 zum Betrieb einer elektrischen Maschine (25) an einem elektrischen Netz (26).
